# EUROPEAN PATENT APPLICATION

(11) **EP 1 883 226 A2**
(43) Date of publication of application: **30.01.2008**
(21) Application number: 07011101.8
(22) Date of filing: 06.06.2007
(51) Int. Cl.: H04N 5/225

(54) **Closed-circuit telecamera housing (cctv)**

(30) Priority: 28.07.2006 IT VI20060243; 13.03.2007 IT VI20070074
(71) Applicant: VIDEOTEC S.P.A., 36015 Schio (Vicenza) (IT)
(72) Inventor: Menegotto, Fabio, 36015 Schio (Vicenza) (IT); Thiella, Francesco, 36015 Schio (Vicenza) (IT)
(74) Representative: Bettello, Pietro

(57) **Abstract**

The finding relates to a closed-circuit telecamera housing (CCTV), of the so-called "discreet" type, or that is, which adopts the configuration of an object already present in the environment to be video monitored, which incorporates the telecamera and the accessories for the operation of the same. Said housing is, in particular, made up of a hollow body (3), which, according to the invention, is equipped, besides the opening for the application of the transparent cover (4), also with at least a second opening, which allows the operator to access the inner components.

## Description

The present invention regards a CCTV closed-circuit telecamera housing, according to the general part of claim 1.

It is known that for the control of indoor premises of buildings and outdoor spaces of the same, as well as for the control of industrial processes, said "closed-circuit TV" (CCTV) is often used.

CCTV installations clearly comprise at least one telecamera capable of filming the area to be controlled, so as to allow for its visualisation by the operator as well as, at times, to record corresponding images.

In order to protect the telecamera against bad weather, as well as to avoid violent acts against it, due to vandalism, to intentionally put the same telecamera out of duty, it is placed inside a special housing, equipped with a glass or another transparent element, placed at the area next to the telecamera's objective.

The telecamera housing is supported by a special device, generally fixed to a wall, to a ceiling or to a parapet, said device comprising a plate, to which a bracket is joined which, at its free end, bears the means capable of allowing the reversible fixing of the housing itself.

In the most widespread embodiment, the housing comprises a metal tubular body, preferably made by means of an aluminium extrusion, closed at both ends by two bottoms, of which the front one contains the transparent wall and the rear one is equipped with couplings for electric connections.

The telecamera with its power supply and the other accessories rest on and are fixed to the base of the inner chamber of the metal body (by way of example, the patent documents no. EP-A-1246454 and no. EP-A-1575265 may be mentioned).

In order to extend the surveillance area, the telecamera is often equipped with the so-called "pan/tilt", which means that it may adopt a combined motion of rotation and inclination in both vertical/horizontal directions (by way of example, the patent document no. VI2002A000090 may be mentioned).

Under particular conditions, the CCTV installation may be required to be out of sight, that's why so-called "discreet" telecameras are used.

In practice, the telecamera housing, instead of appearing on the outside as a substantially parallelepipedal container, adopts the configuration of an object normally present in the environment to be video monitored.

Usually, the telecamera housing adopts the configuration of a street lamp and is therefore comprised of an arm that supports a bulb which, instead of containing a light bulb, incorporates the telecamera and the accessories for the operation of the same, such as a power supply, a cooling fan, dissipators-heaters, the small motor for the pan/tilt and the necessary electric connections between the various inner components and the outside connection.

In the current state of the art, "discreet" telecameras, which camouflage themselves in the shape of street lamps, are substantially made up of two parts: a usually metallic, hollow body, which represents the body of the street lamp, equipped with a support arm and a transparent cover which, instead of allowing for the emission of light rays of a light bulb, serves as a shooting opening on behalf of the objective of the hidden telecamera.

The transparent cover is obviously positioned in the lower part of the body of the street lamp and is removably applied in order to allow access inside the street lamp itself, while the above-mentioned body is upperly closed.

Such construction form is obviously valid when one must change a light bulb in a normal street lamp while, on the contrary, it is unsatisfactory when it must contain a CCTV telecamera.

In fact, in practice, through the hole that is obtained by removing the lower transparent cover, the assembly operations of the various components of the telecamera are considerably difficult, with long assembly times; moreover, said components, once fixed, are difficult to access for the operator, who must carry out installation and maintenance operations, such as adjusting the set-up of the telecamera or the replacement of parts; the whole is made worse by the fact that such operations are often carried out by the same under precarious conditions, on a ladder or on temporary scaffolding for example.

The aim of the present invention is to make a CCTV telecamera housing of the so-called "discreet" type, which adopts an external configuration equal to a normal street lamp that is free from the drawbacks shown by similar products of known type.

Specifically, the aim of the present invention is to make a CCTV telecamera housing externally configured as a street lamp, which allows carrying out assembly/disassembly operations and the adjustment of the various inner components in a quick, simple manner and in complete safety for the operator.

A further aim of the present invention is to make a CCTV telecamera housing as described above, which is suitable for operation under the most varied environmental conditions.

A further aim of the present invention is to make a CCTV telecamera housing as described above, which allows for the interchangeability of the single inner components, of the single telecamera or the entire, completely assembled housing, in a quick and simple manner, such as to be carried out even by unskilled personnel under conditions of maximum safety.

Such objects are obtained by making a CCTV telecamera housing, which is characterised in that the body is equipped, besides the opening for the application of the transparent cover, with at least a second opening, which allows the operator to access the inner components.

Advantageously, the above-mentioned second opening is positioned opposite the transparent cover and its closing is carried out by a lid which, under operating conditions, serves as a cover of the entire housing.

Moreover, such objects are obtained through an external preassembly operation, with which the various components are first applied onto a plate which, after the assembly, is inserted, through the above-mentioned second upper opening, into the body of the housing; furthermore, the wiring of the electric cables is facilitated by a plate equipped with cable ducts that is mobile, the single telecamera being capable of being removed from its seat and/or replaced without having to intervene on the other inner components with disassembly or displacement operations of the same.

Moreover, such objects are obtained by providing for the housing to be supported by a bracket, which may be of the type applied to a wall or, indifferently, to a ceiling or a parapet and for the two parts housing/bracket to be mutually coupled through a quick joint.

Moreover, such objects are obtained by providing for the housing to be equipped with filters and inner air recirculation and filters placed at the vents by which, when the housing is operating under particular environmental conditions (considerable moisture content or high temperatures), the damaging of the control electric components and, above all, the misting of the telecamera's objective are prevented.

Lastly, moreover, such objects are obtained by providing for an external coating of the housing, removably applied and easily replaceable to "customise" the telecamera, or, in other words, to give the apparatus the most varied aesthetic aspects (form and colours), by always using the same housing as a base of the apparatus. Furthermore, it protects the housing against atmospheric agents.

The invention will now be better described, referring to a preferential embodiment thereof, given by way of example and not limitation, with the help of the accompanying drawings,
in which:
- figs 1 and 2 represent, respectively, a side view and a sectional view, according to line II-II, of the housing of the invention, under operating condition;
- fig. 3 represents a perspective view, free of the upper lid, of the housing of the invention;
- figs 4 to 5 represent two perspective views of the housing of the invention, respectively in the assembly phase of the components and in the insertion phase of the shooting apparatus;
- fig. 6 represents the use of the wiring plate;
- fig. 7 represents the coupling phase of the housing to the support bracket;
- figs. 8 and 9 represent respectively perspective and exploded views of the housing equipped with an external coating;
- fig. 10 represents a sectional view, according to line X-X of fig. 8, of the housing of the invention;
- fig. 11-13 represent three perspective views of the housing of the invention, in three different use modes.

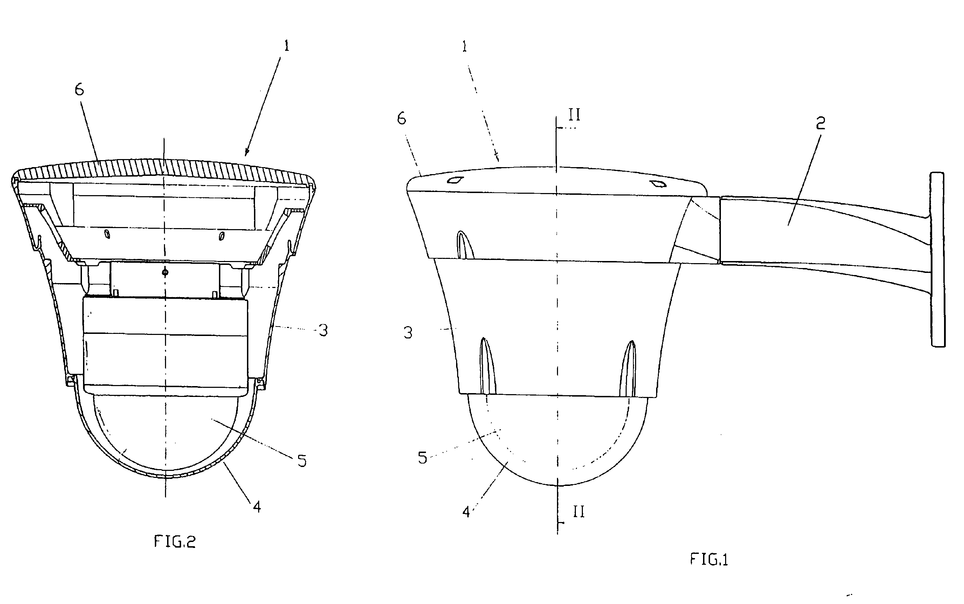

As may be seen in figs. 1 and 2, the telecamera housing of the invention, indicated overall with reference 1, supported by a bracket 2 and externally configured as a normal street lamp, is substantially made up of a body 3, lowerly equipped with a transparent cover 4 and which contains inside the telecamera 5 and the other accessory components and is upperly closed by a lid 6.

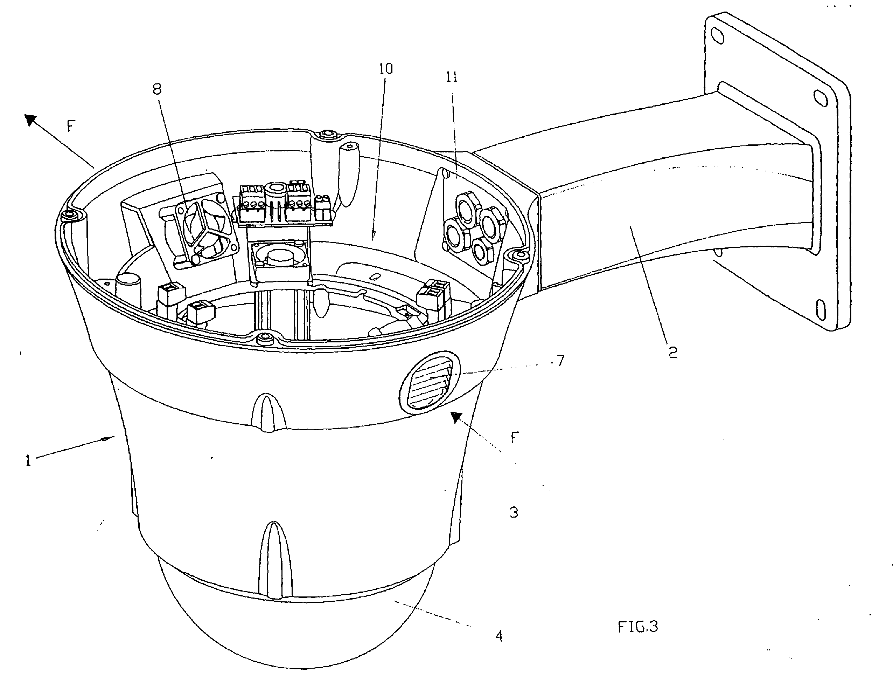

As may be seen in fig. 3, which shows the housing 1 free of the upper lid 6, at least two air intakes 7 are made on the body 3, optionally equipped with a filtering mesh, which allow for the internal ventilation of the housing (see arrows "F"); said ventilation may be spontaneous or forced, through an air flow generated by the action of fans 8, placed at the above-mentioned air intakes.

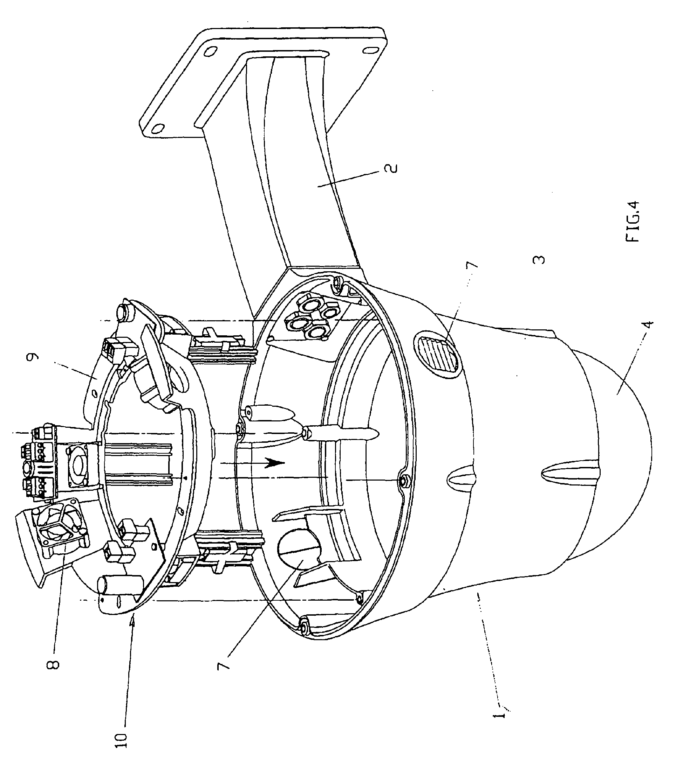

The assembly operation of the various components, which are to make up the inner part of the complete housing 1 of fig. 3, first provides for the assembly operation of the single components on a flange 9, and then, the insertion and positioning of the entire assembled group 10 inside the body 3 (see fig. 4).

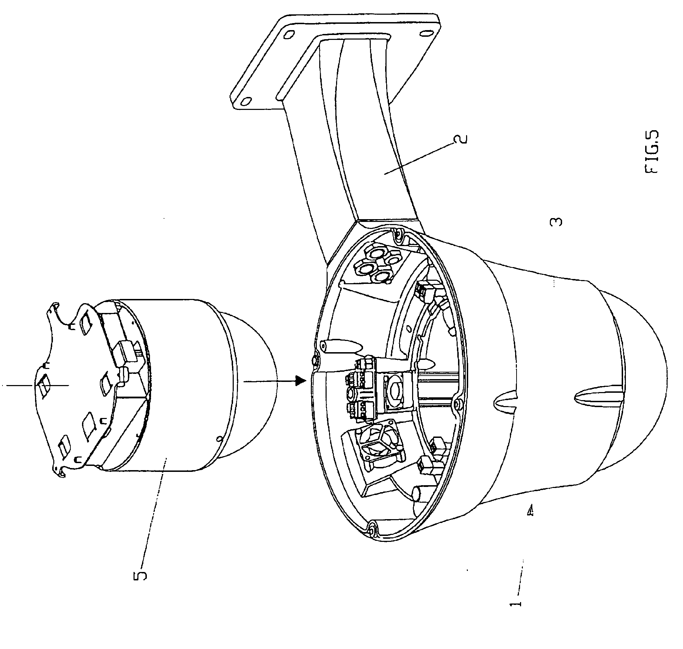

Still next, the telecamera 5 is inserted (see fig. 5), which is coupled to the inner part previously positioned removably and independently from the other components, in order to be easily extracted or replaced without intervening on the other above-mentioned components.

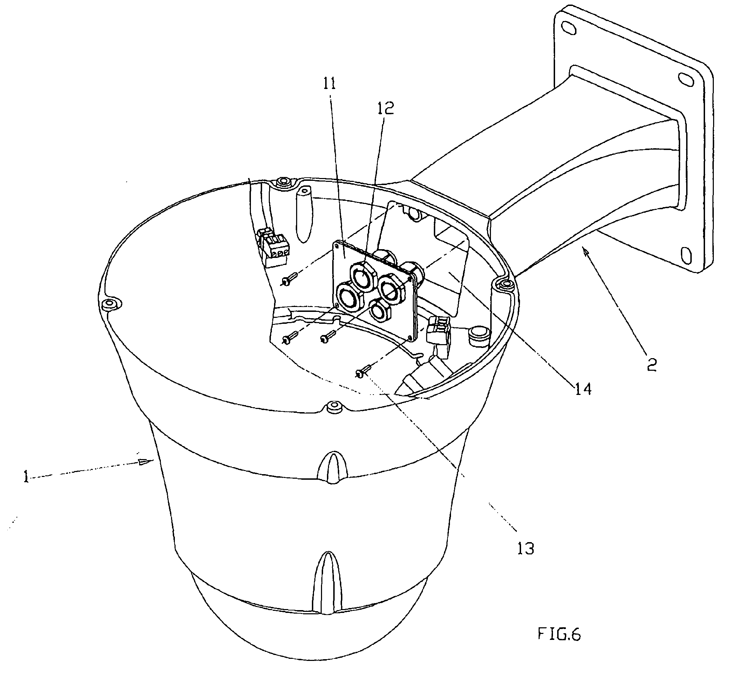

As may be seen in fig. 6, the wiring operation, or, in other words, the connection of the electric cables (not represented) of the installation coming from the inside of the bracket 2, is facilitated by the use of a plate 11, equipped with a plurality of cable ducts 12, advantageously provided with different measurements for the clamping of cables with a different section, which is applied, through screws 13, on the through slit 14, making, in such a way, a hermetic sealing with which, in combination with the hermetic sealing of the lid 6, the perfect sealing of the inner chamber of the apparatus is guaranteed.

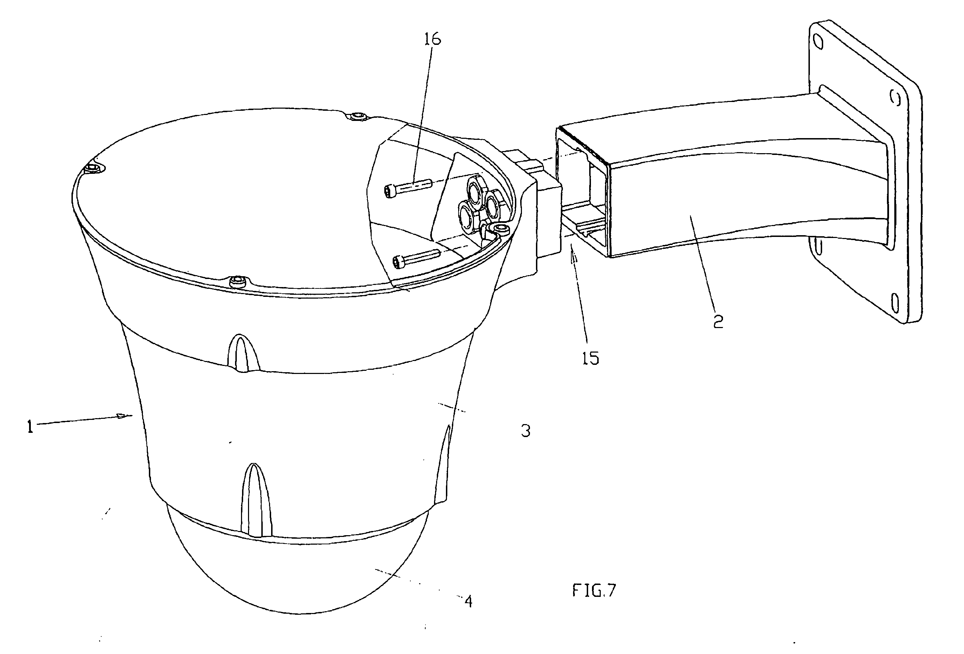

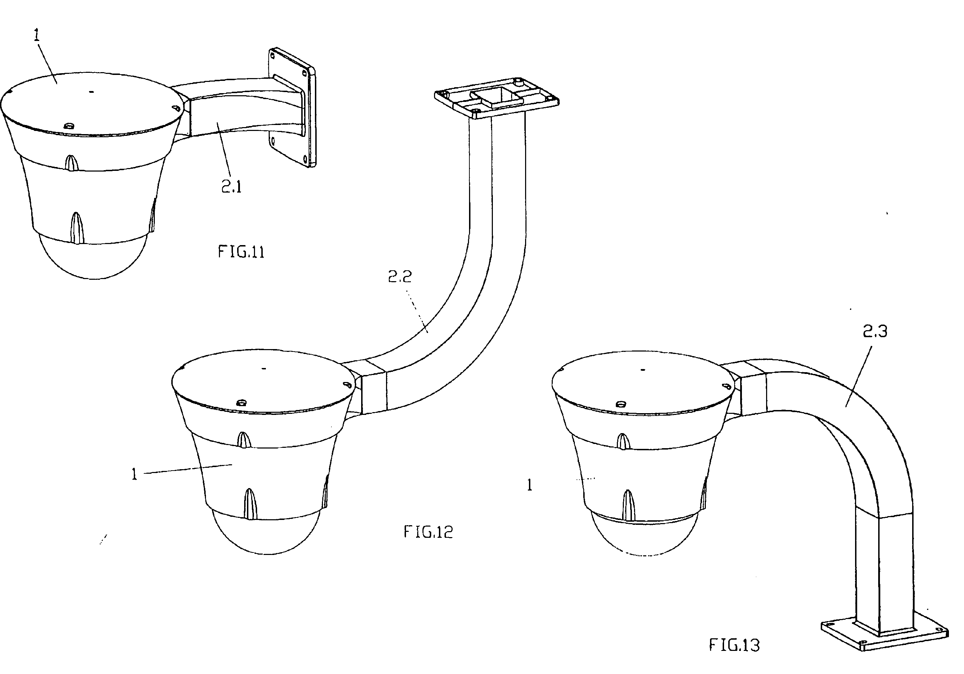

As may be seen in fig. 7, the coupling between the housing 1 and the support bracket 2 is made by a simple mortise joint 15, which is kept blocked by fixation screws 16; all this allows for a simple and quick interchangeability of the apparatus, thus allowing for making wall-type 2.1 (fig. 11), ceiling-type 2.2 (fig. 12) or floor-type 2.3 (fig. 13) "discreet" telecamera housings, by always using the same apparatus 1.

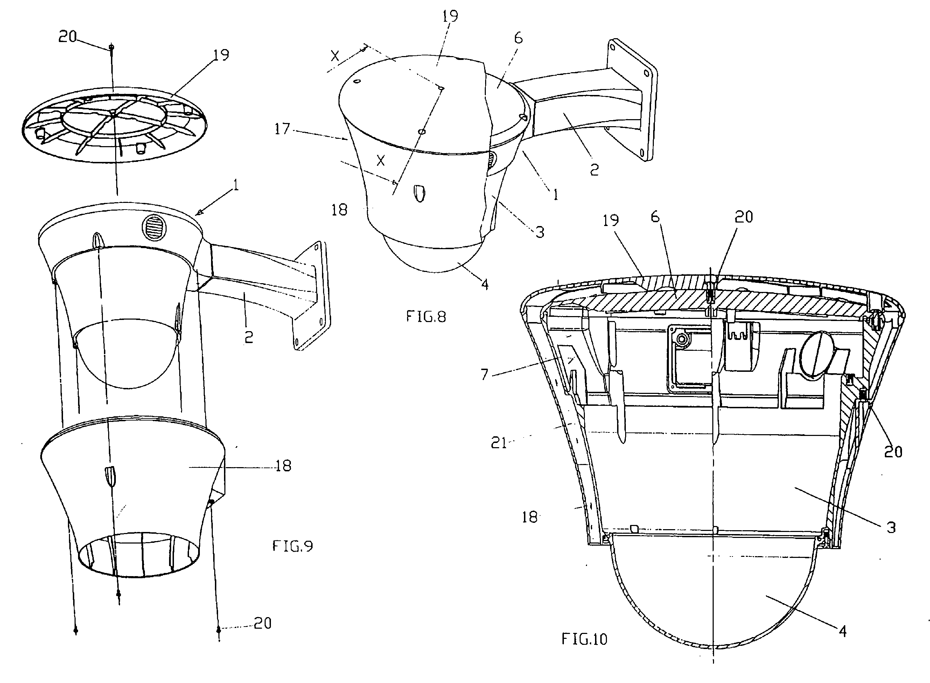

As may be seen in fig. 8 and 9, the invention provides for the possibility that a coating 17 may be applied externally onto the housing 1, made up of a body 18, upperly closed by a lid 19 and held on the body 2 by screws 20.

Advantageously, as may be seen in fig. 10, the body 18 of the coating 17 is configured as to create an air space 21, which allows for the passage of the above-described air flow inside the housing.

It may therefore be inferred from the above how, through the housing of the invention, intrinsically simple from a construction point of view, one may intervene with extreme easiness and safety on inner components and, in particular, on the adjustment of the telecamera, should the user's needs change.

Obviously, embodiments of the invention different from that described are possible, without departing from the scope of the claims, defined below.

## Claims

1. CLOSED-CIRCUIT TELECAMERA HOUSING (CCTV), of the so-called "discreet" type, or that is, which adopts the conformation of an object already present in the environment to be video monitored, which incorporates the telecamera and the accessories for the operation of the same, such as a power supply, a cooling fan, dissipators-heaters, the small motor for the pan/tilt and the necessary electric connections between the various inner components and the outside connection and is made up of a hollow body (3), equipped with a support bracket (2) and a transparent cover (4), which serves as a shooting opening on behalf of the objective of the hidden telecamera (5),
said housing being **characterised in that** the hollow body (3) is equipped, besides the opening for the application of the transparent cover (4), with at least a second opening, which allows the operator to access the inner components.

2. HOUSING, according to claim 1, **characterised in that** the second opening is positioned opposite the transparent cover (4).

3. HOUSING, according to claim 2, **characterised in that** the closing of the second opening is carried out by a removable lid (6).

4. HOUSING, according to claim 3, **characterised in that** the components necessary to the operation of the apparatus are first applied onto a flange (9), through a preassembly operation and, then, the entire assembled group (10) is inserted, through the second upper opening, into the body (2) of the housing (1).

5. HOUSING, according to one or more of the preceding claims, **characterised in that** the single telecamera (5) is removable from its seat and/or replaceable without having to intervene on the other inner components, through disassembly or displacement operations of the same.

6. HOUSING, according to one or more of the preceding claims, **characterised in that** at least two air intakes (7) are present on the body (3) of the housing (1), possibly equipped with a filtering mesh, which allow for the internal ventilation of the housing.

7. HOUSING, according to claim 6, **characterised in that** the ventilation of the inner part of the housing is of the "forced" type, through an air flow generated by the action of fans (8), placed at the above-mentioned air intakes.

8. HOUSING, according to one or more of the preceding claims, **characterised in that** a plate (11) is used in the wiring of the electric cables, equipped with a plurality of cable ducts (12), of different measurements for the clamping of cables with a different section, which is applied, through screws (13), on the through slit (14).

9. HOUSING, according to claims 3 and 8 and one or more of the other claims, **characterised in that** the lid (6) and the plate (11) feature a hermetic sealing to guarantee the perfect sealing of the inner chamber of the apparatus.

10. HOUSING, according to one or more of the preceding claims, **characterised in that** the coupling between the housing (1) and the support bracket (2) is made by a simple mortise joint (15), which is kept blocked by fixation screws (16).

11. HOUSING, according to one or more of the preceding claims, **characterised in that** a coating (17) is applied externally onto the housing (1), made up of a body (18), upperly closed by a lid (19) and held on the body (2) by screws (20).

12. HOUSING, according to claim 11, **characterised in that** the body (18) of the coating (17) is configured as to create an air space (21), which allows for the passage of an air flow.

13. HOUSING, according to one or more of the preceding claims, **characterised in that** it is configured to allow for the interchangeability of the apparatus (1) on wall-type (2.1), ceiling-type (2.2) and floor-type (2.3) brackets.
